# EUROPÄISCHE PATENTSCHRIFT

(11) **EP 2 512 866 B1**
(45) Veröffentlichungstag und Bekanntmachung des Hinweises auf die Patenterteilung: **10.02.2016**
(21) Anmeldenummer: 10787063.6
(22) Anmeldetag: 23.11.2010
(51) Int. Cl.: B60R 13/04, F16B 5/12, F16B 21/06, F16B 5/06, B60R 9/058

(54) **VORRICHTUNG ZUM FIXIEREN EINES GEGENSTANDES IN EINER VERTIEFUNG**
DEVICE FOR FASTENING AN OBJECT IN A RECESS
DISPOSITIF POUR FIXER UN OBJET DANS UNE CAVITÉ

(30) Priorität: 18.12.2009 DE 102009058813
(43) Veröffentlichungstag der Anmeldung: 24.10.2012
(73) Patentinhaber: A. RAYMOND et Cie, 38000 Grenoble (FR)
(72) Erfinder: HAUSER, Ingo, 79400 Kandern (DE); REGENSBURGER, Jan, 79400 Kandern (DE); WALTER, Stéphane, F-68210 Ballersdorf (FR)
(74) Vertreter: RACKETTE Patentanwälte PartG mbB
(86) Internationale Anmeldenummer: PCT/EP2010/068057
(87) Internationale Veröffentlichungsnummer: WO 2011/072994

(56) Entgegenhaltungen:
- EP-A1- 1 674 337
- DE-A1-102007 003 319
- DE-U1- 9 413 049
- JP-A- 4 316 704
- JP-A- 2000 027 824

## Beschreibung

Die Erfindung betrifft eine Vorrichtung zum Fixieren eines Gegenstandes in einer Vertiefung gemäß dem Oberbegriff des Patentanspruches 1.

Eine derartige Vorrichtung ist aus JP 2000 027 824 A oder auch aus DE 10 2006 039 577 B3 bekannt. Die vorbekannte Vorrichtung verfügt über ein Deckteil, das zum Eingriff mit einer Dachleiste als Gegenstand eingerichtet ist. Weiterhin ist ein mit dem Deckteil lösbar verbindbares Fußteil vorhanden, das zum Verankern in einer als Dachkanal eines Kraftfahrzeugs ausgebildete Vertiefung ausgestaltet ist. Das Fußteil verfügt bei dieser vorbekannten Vorrichtung über einen seitlich vorstehenden Anlagevorsprung, der zum Eingriff mit einem umgebogenen Halterand des Dachkanals konturiert ist. Dadurch lässt sich die Vorrichtung bei hinreichender Maßhaltigkeit des Halterandes zuverlässig fixieren.

Aus DE 76 18 760 U und aus DE 10 2004 056 603 A1 sind Bauteile bekannt, bei denen ein Verankerungselement über biegsame Verbindungsstege mit außenseitigen Wänden verbunden ist, so dass das Verankerungselement gegenüber den Wänden beweglich ist und Toleranzen in der Positionierung eines zum Eingriff mit dem Verankerungselement vorgesehenen Verbindungselementes bei ortsfester Positionierung der Wände ausgleichen kann.

Der Erfindung liegt die Aufgabe zugrunde, eine Vorrichtung der eingangs genannten Art anzugeben, die sich durch ein Toleranzen ausgleichendes, aber dennoch gegenüber verhältnismäßig hohen mechanischen Belastungen widerstandsfähiges Fußteil auszeichnet. Diese Aufgabe wird bei einer Vorrichtung der eingangs genannten Art erfindungsgemäß mit den kennzeichnenden Merkmalen des Patentanspruches 1 gelöst.

Dadurch, dass das Fußteil ein über die flexiblen Verbindungsstege Toleranzen ausgleichendes Verankerungselement aufweist, das jedoch über wenigstens ein Blockierteil in einer Endmontagestellung festgelegt ist, lassen sich bei der Montage Toleranzen eines mit dem Verankerungselement in Eingriff zu bringenden Befestigungselementes ausgleichen, wobei jedoch die Stabilität des Fußteiles durch das Blockieren der Beweglichkeit des Verankerungselementes gegenüber einer ansonsten weiterhin bestehenden Beweglichkeit deutlich erhöht ist.

Weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden Beschreibung eines Ausführungsbeispieles mit Bezug auf die Figuren der Zeichnung.

Es zeigen:
- Fig. 1: in einer perspektivischen Ansicht ein Ausführungsbeispiel einer erfindungsgemäßen Vorrichtung mit einem Deckteil und mit einem Fußteil, die als separate Bauelemente ausgeführt sind,
- Fig. 2: in einer perspektivischen Ansicht das Deckteil gemäß Fig. 1 im Eingriff mit einer Dachleiste eines Kraftfahrzeugs als Gegenstand,
- Fig. 3: in einer perspektivischen Ansicht das Fußteil gemäß Fig. 1 zu Beginn eines Befestigungsvorganges in einem Dachkanal eines Kraftfahrzeuges als Vertiefung,
- Fig. 4: in einer perspektivischen Ansicht das Fußteil gemäß Fig. 1 nach dem Anordnen in dem Dachkanal,
- Fig. 5: in einer teilgeschnittenen perspektivischen Ansicht das Deckteil und das Fußteil in dem Ausführungsbeispiel gemäß Fig. 1 in einer Endmontageanordnung in einem Dachkanal eines Kraftfahrzeugs und
- Fig. 6: in einer Schnittansicht die Anordnung gemäß Fig. 5 mit der über die erfindungsgemäße Vorrichtung den Dachkanal abdeckenden Dachleiste.

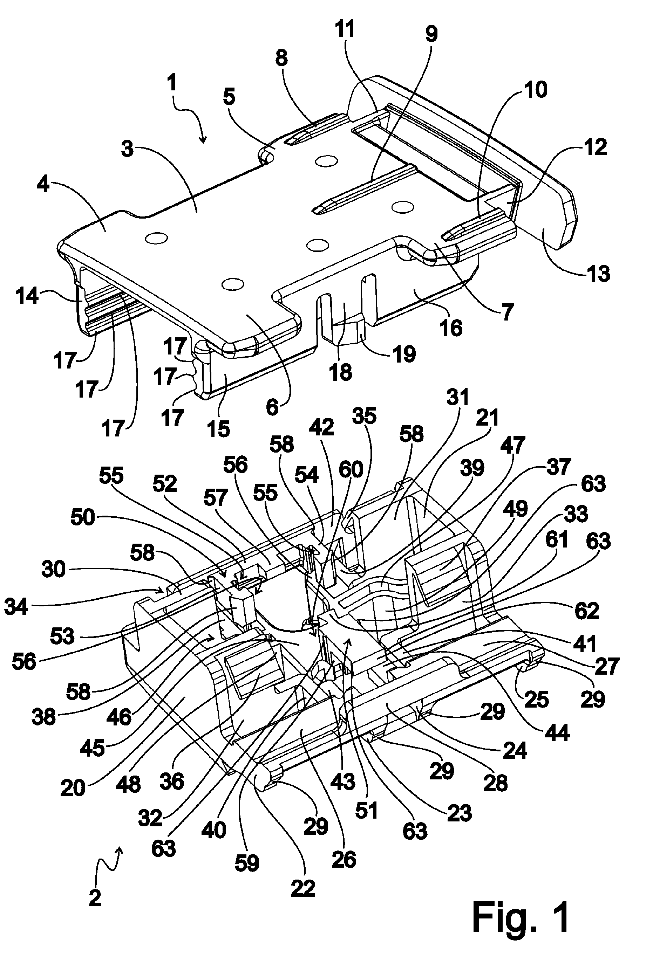

Fig. 1 zeigt in einer perspektivischen Ansicht ein Ausführungsbeispiel einer erfindungsgemäßen Vorrichtung zum Fixieren einer in Fig. 1 nicht dargestellten Dachleiste als Gegenstand in einem in Fig. 1 ebenfalls nicht dargestellten Dachkanal eines Kraftfahrzeugs als Vertiefung. Das Ausführungsbeispiel gemäß Fig. 1 verfügt über ein Deckteil 1 und über ein Fußteil 2, die bei diesem Ausführungsbeispiel als separate, aus einem hartelastischen Kunststoffmaterial hergestellte Bauelemente ausgeführt sind.

Das Deckteil 1 verfügt über eine großflächige Deckplatte 3 von einer im Wesentlichen rechteckigen Gestalt mit langen Längsseiten und kurzen Querseiten, in deren Eckbereichen an den Längsseiten nach außen überstehende Fixierzungen 4, 5, 6, 7 ausgebildet sind. An einer Deckseite der Deckplatte 3 sind angrenzend an einer Querseite der Deckplatte 3 über die Deckplatte 3 überstehende Klemmrippen 8, 9, 10 ausgebildet. Weiterhin sind an dieser Querseite an der Deckplatte 3 zwei Anbindungsstege 11, 12 ausgebildet, die eine sich parallel zu dieser Querseite erstreckende Abschlussplatte 13 tragen. Weiterhin verfügt das Deckteil 1 auf der den Klemmrippen 8, 9, 10 abgewandten Seite der Deckplatte 3 über eine sich entlang einer Längsseite der Deckplatte 3 erstreckende lange Seitenwange 14 über zwei sich entlang der anderen Längsseite erstreckende kurze Seitenwangen 15, 16, die gegenüber den äußeren Kanten der Fixierzungen 4, 5, 6, 7 nach innen versetzt sind. An den Seitenwangen 14, 15, 16 sind sich parallel zu den Längsseiten der Deckplatte 3 erstreckende Rastnasen 17 vorhanden.

Zwischen den an einer Längsseite der Deckplatte 3 angeordneten kurzen Seitenwangen 15, 16 ist ein Federarm 18 ausgebildet, der sich von der Deckplatte 3 weg erstreckt und in relaxierter Anordnung in der Ebene der auf dieser Längsseite angeordneten kurzen Seitenwangen 15, 16 liegt. An dem freien Ende des Federarmes 18 ist eine Arretiernase 19 ausgebildet, die nach außen über den Federarm 18 übersteht.

Das im Wesentlichen quaderartig ausgebildete Fußteil 2 der beispielhaften erfindungsgemäßen Vorrichtung gemäß Fig. 1 weist an zwei kurzen Querseiten Seitenwände 20, 21 als Wände auf, die in einem Abstand parallel zueinander ausgerichtet sind. Auf einer Seite der Seitenwände 20, 21 sind Trägerstege 22, 23, 24, 25 angeformt, die sich von den Seitenwänden 20, 21 weg erstrecken und Randleisten 26, 27 tragen. Zwischen benachbarten Randleisten 26, 27 in ein Mittensteg 28 ausgebildet, der sich in Richtung einer Deckseite des Fußteiles 2 erstreckt. Die von den Seitenwänden 20, 21 abgewandten Randseiten der Trägerstege 22, 23, 24, 25 sind mit stufenartig angeordneten Randrippen 29 versehen.

An den aufeinander zu weisenden Innenseiten der Seitenwände 20, 21 weist das Deckteil 2 jeweils zwei an einer Seitenwand 20, 21 angeformte und sich jeweils entlang einer langen Längsseite des Deckteiles 2 aufeinander zu erstreckende Längswände 30, 31, 32, 33 auf. Jede Längswand 30, 31, 32, 33 trägt eine Rastzunge 34, 35, 36, 37, die an den Außenseiten der Längswände 30, 31, 32, 33 angeordnet sind und sich von der Deckseite des Fußteiles 2 schräg ausgerichtet weg erstrecken.

An jeder Längswand 30, 31, 32, 33 ist in einem von der betreffenden Seitenwand 20, 21, an der die jeweilige Längswand 30, 31, 32, 33 angeformt ist, abgewandten Endbereich ein Quersteg 38, 39, 40, 41 ausgebildet, der sich nach außen erstreckt. Die Querstege 38, 39, die auf der den Randleisten 26, 27 abgewandten Seite des Fußteiles 2 angeordnet sind, tragen eine Führungsplatte 42, die in einem Abstand von den betreffenden Längswänden 30, 31 angeordnet ist. Die anderen Querstege 40, 41 gehen in die mittig liegenden Trägerstege 23, 24 über und weisen rechtwinklig zu den Seitenwänden 20, 21 und den Längswänden 30, 31, 32, 33 ausgerichtete Auflageblöcke 43, 44 auf.

Weiterhin ist aus der Darstellung gemäß Fig. 1 ersichtlich, dass das Deckteil 2 über ein in etwa mittig zwischen den Seitenwänden 20, 21 und den Längswänden 30, 31, 32, 33 liegendes Verankerungselement 45 verfügt, das über eine Anzahl von Verbindungsstegen 46, 47, 48, 49 mit den Seitenwänden 20, 21 verbunden sind. Bei diesem Ausführungsbeispiel sind zwischen jeweils einer Seitenwand 20, 21 und dem Verankerungselement 45 jeweils zwei Verbindungsstege 46, 47; 48, 49 vorhanden. Die Verbindungsstege 46, 47, 48, 49 sind bei diesem Ausführungsbeispiel wellenartig oder ziehharmonikaartig ausgeführt und halten somit in der in Fig. 1 dargestellten Vormontageanordnung das Verankerungselement 45 mit einer gewissen Beweglichkeit gegenüber den einen Rahmen des Fußteiles 2 bildenden Seitenwänden 20, 21 und Längswänden 30, 31, 32, 33.

Schließlich ist die beispielhafte erfindungsgemäße Vorrichtung gemäß Fig. 1 mit einem Randblockierteil 50 und einem Stirnblockierteil 51 als Blockierteile ausgestattet, die unmittelbar nach der Herstellung über dünne Anspitzstege mit dem Fußteil 2 verbunden sind. Das Randblockierteil 50 ist im Wesentlichen U-förmig mit einem Querabschnitt 52 und zwei an den jeweils gegenüber liegenden Enden des Querabschnittes 52 angeformten Schenkelabschnitten 53, 54 ausgebildet und in der Anordnung gemäß Fig. 1 rechtwinklig versetzt zwischen der Führungsplatte 42 sowie dem Verankerungselement 45 positioniert. Das Stirnblockierteil 52 umschließt dabei den der Führungsplatte 52 zugewandten Randbereich des Verankerungselementes 45, wobei das Verankerungselement 45 und das Randblockierteil 50 über eine Anordnung aus sich parallel zu den Seitenwänden 20, 21 und den Längswänden 30, 31, 32, 33 erstreckenden Führungsnuten 55 und Führungsrippen 56 gegeneinander verschieblich in Eingriff bringbar sind.

An dem Randblockierteil 50 ist weiterhin eine sich zwischen den Schenkelabschnitten 53, 54 in Richtung des Verankerungselementes 45 erstreckende Anschlagzunge 57 sowie sich auf der dem Querabschnitt 52 abgewandten Seite der Schenkelabschnitte 53, 54 nach außen erstreckende Krallnasen 58 ausgebildet.

Das Stirnblockierteil 51 ist im Wesentlichen L-artig ausgebildet und auf der dem Randblockierteil 50 gegenüber liegenden Seite des Verankerungselementes 45 angeordnet. An einem Schenkelabschnitt 59 des Stirnblockierteiles 51 und auf der dem Randblockierteil 50 abgewandten Seite des Verankerungselementes 45 ist ebenfalls ein Anordnung aus Führungsnut 60 und Führungsrippe 61 an einem Schenkelabschnitt 62 ausgebildet, so dass entsprechend dem Randblockierteil 50 das Stirnblockierteil 51 parallel zu den Seitenwänden 20, 21 und den Längswänden 30, 31, 32, 33 verschiebbar ist. Der andere Schenkelabschnitt 62 des Stirnblockierteiles 51 liegt in der Anordnung gemäß Fig. 1 zwischen den innenseitigen Querstegen 40, 41 den Auflageblöcken 43, 44 in einem Abstand gegenüber. Wie bei dem Randblockierteil 50 sind an dem Stirnblockierteil 51 an den Schenkelabschnitten 61, 62 Krallnasen 63 ausgebildet, die nach außen weisen.

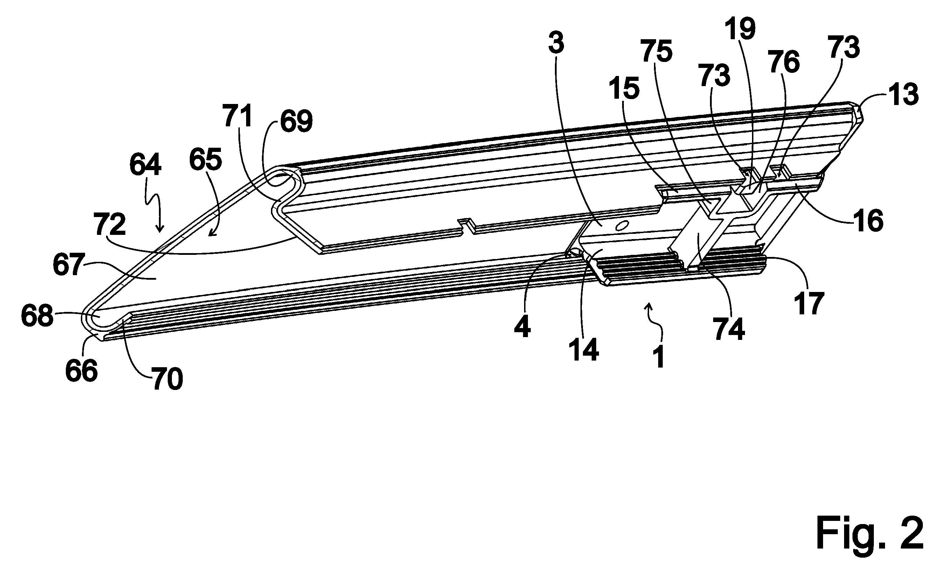

Fig. 2 zeigt in einer perspektivischen Ansicht das Deckteil 1 der erfindungsgemäßen Vorrichtung in dem Ausführungsbeispiel gemäß Fig. 1 im Eingriff mit einer Dachleiste 64 eines in Fig. 2 nicht dargestellten Kraftfahrzeugs als Gegenstand. Die Dachleiste 64 ist aus einem gebogenen Metallband 65 und einer das Metallband 65 auf einer Außenseite umgebenden Decklage 66 aus einem weichelastischen Material aufgebaut. Das Metallband 65 ist so gebogen, dass es eine im Wesentlichen flache Deckseite 67, außenseitig der Deckseite 67 ausgebildete Randbögen 68, 69, einen sich von einem Randbogen 68 im Wesentlichen parallel zu der Deckseite 61 erstreckenden Parallelendabschnitt 70, einen sich von dem anderen Randbogen 69 in etwa parallel zu der Deckseite 67 erstreckenden Zwischenabschnitt 71 und einen sich an den Zwischenabschnitt 71 anschließenden sowie sich in etwa rechtwinklig zu der Deckseite 67 erstreckenden Querendabschnitt 72 aufweist.

In der Darstellung gemäß Fig. 2 ist das Deckteil 1 mit seinen teilweise nicht sichtbaren Fixierzungen 4, 5, 6, 7 im Eingriff in die Randbögen 68, 69 der Dachleiste 64 dargestellt, wobei die Abschlussplatte 13 an einem stirnseitigen Ende der Dachleiste 64 anliegt und die Arretiernase 19 in eine in dem Querendabschnitt 72 der Dachleiste 64 eingebrachte Rastausnehmung 73 eingreift. Dadurch ist das Deckteil 1 lösbar an der Dachleiste 64 fixiert.

Aus der Darstellung gemäß Fig. 2 ist ersichtlich, dass das Deckteil 1 über einen an der langen Seitenwange 14 angeformten Quersteg 74 verfügt, der sich von der langen Seitenwange 14 in Richtung der langen Seitenwange 14 gegenüber liegenden kurzen Seitenwangen 15, 16 erstreckt. An dem der langen Seitenwange 14 gegenüber liegenden Ende des Quersteges 74 sind zwei L-förmig ausgebildete Winkelstege 75, 76 angeformt, die sich von dem Quersteg 74 unter Umschließen des Federarmes 18 in Richtung der der langen Seitenwange 14 gegenüber liegenden kurzen Seitenwangen 15, 16 erstrecken.

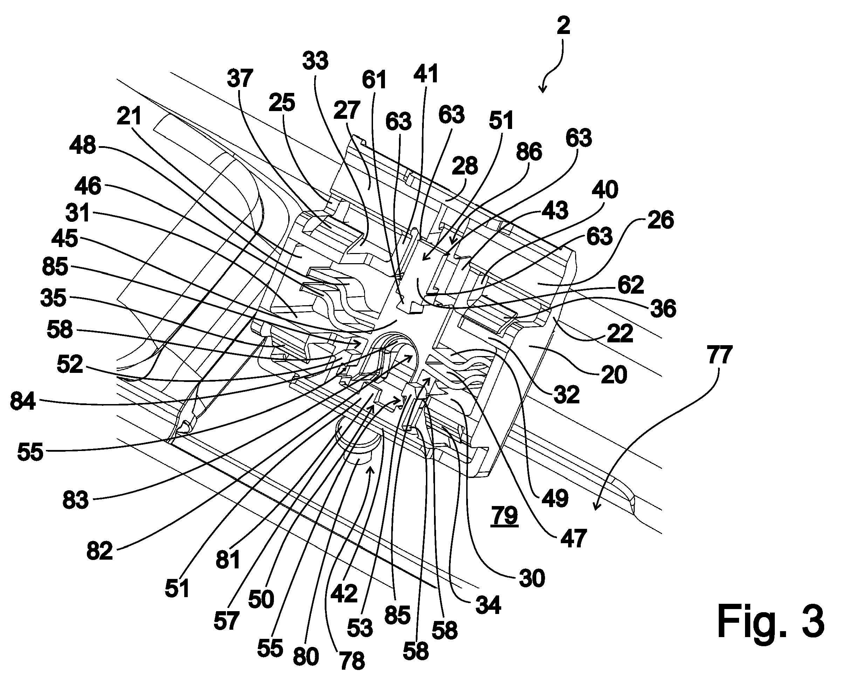

Fig. 3 zeigt in einer perspektivischen Ansicht das Fußteil 2 bei dem erfindungsgemäßen Ausführungsbeispiel gemäß Fig. 1 sowie einen Dachkanal 77 eines Kraftfahrzeuges als Vertiefung, in dem das Fußteil 2 anzubringen ist. Hierfür ist in dem Dachkanal 77 ein fest mit der Karosserie des Kraftfahrzeugs verbundener Stehbolzen 78 vorhanden, der aus einem sich von dem Boden 79 des Dachkanales 77 weg erstreckenden Bolzenschaft 80 und aus einem Bolzenkopf 81 aufgebaut ist, der auf der dem Boden 79 abgewandten Seite des Bolzenschaftes 80 angeordnet ist und den Bolzenschaft 80 radial überragt.

Aus der Darstellung gemäß Fig. 3 ist weiterhin ersichtlich, dass das Verankerungselement 45 im Bereich einer zu dem Randblockierteil 50 offenen Bolzenaufnahme 82 mit zwei seitlichen Anfahrrampen 83 und einer sich auf der dem Randblockierteil 50 gegenüber liegenden Seite zwischen den Anfahrrampen 83 erstreckenden Auflagestufe 84 ausgebildet ist. Die Anfahrrampen 83 weisen dabei eine sich in Richtung der Führungsplatte 42 gegenüber der Auflagestufe 84 absenkende Schräge auf, während die Auflagestufe 84 mit einer planen Auflagefläche für die dem Boden 79 zugewandte Unterseite des Bolzenkopfes 81 ausgebildet ist.

Somit ist in Verbindung mit der Darstellung gemäß Fig. 3 verständlich, dass der Montagevorgang des Fußteiles 2 in den Dachkanal 77 dadurch beginnt, dass das Fußteil 2 schräg mit der Bolzenaufnahme 82 im Bereich des Stehbolzens 78 angeordnet und so verschoben wird, dass der Bolzenkopf 81 in die Bolzenaufnahme 82 eintritt, entlang der Anfahrrampen 83 aufgleitet und schließlich an der Auflagestufe 84 aufliegt. Dadurch ist über die schwimmende Lagerung des Verankerungselementes 45 in im Bereich des Randblockierteiles 50 und des Stirnblockierteiles 51 ausgebildeten, sich in eine Toleranzausgleichsrichtung erstreckenden sowie gegenüber dem Randblockierteil 50 und dem Stirnblockierteil 51 in dieser Toleranzausgleichsrichtung größer dimensionierten Aufnahmeräume 85, 86 über die beweglichen Verbindungsstege 46, 47, 48, 49 sichergestellt, dass innerhalb vorbestimmter Toleranzen variierende Positionierungen von Stehbolzen 78 in einer Querrichtung in dem Dachkanal 77 in einer über das Verankerungselement 45 erhabenen Anordnung des Randblockierteiles 50 und des Stirnblockierteiles 51 ausgleichbar sind.

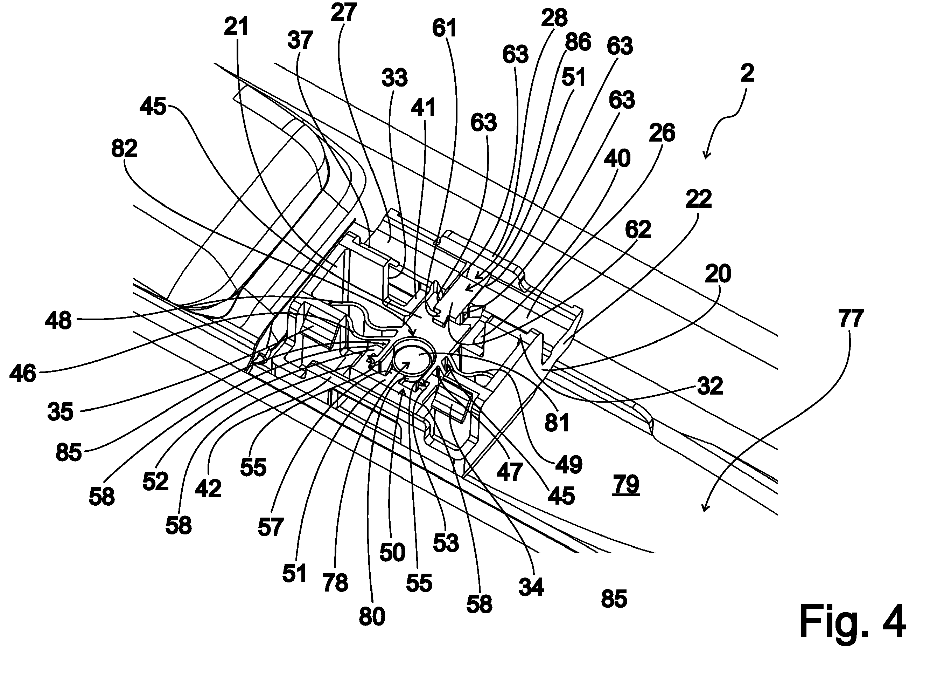

Fig. 4 zeigt in einer perspektivischen Darstellung die in dem Dachkanal 77 verankerte Anordnung des Fußteiles 2, in der der Stehbolzen 78 nunmehr in der Bolzenaufnahme 82 angeordnet ist und sowohl das Randblockierteil 50 als auch das Stirnblockierteil 51 in einer gegenüber der erhabenen Anordnung gemäß Fig. 1 und Fig. 3 abgesenkten blockierenden Anordnung sind. In dieser abgesenkten Anordnung greifen, wie aus Fig. 4 ersichtlich ist, die an dem Randblockierteil 50 und an dem Stirnblockierteil 51 ausgebildeten Krallnasen 58, 63 in die ihnen gegenüber liegenden Querstege 38, 39 beziehungsweise Randleisten 26, 27 als Wände der Aufnahmeräume 85, 86 ein, so dass das Verankerungselement 45 in seiner ursprünglich vorhandenen Beweglichkeit in der sich entlang der Querseite ausgerichteten Toleranzausgleichsrichtung gegenüber dem Fußteil 2 blockiert ist. Weiterhin erfolgt durch den Eingriff des Randblockierteiles 50 und des Stirnblockierteiles 51 mit dem Verankerungselement 45 eine mechanische Stabilisierung des Verankerungselementes 45.

Dabei wurde das Einschieben des Randblockierteiles 50 und des Stirnblockierteiles 51 für die Anordnung gemäß Fig. 4 unter Zerstören der Anspitzstege durch ein separates Werkzeug durchgeführt.

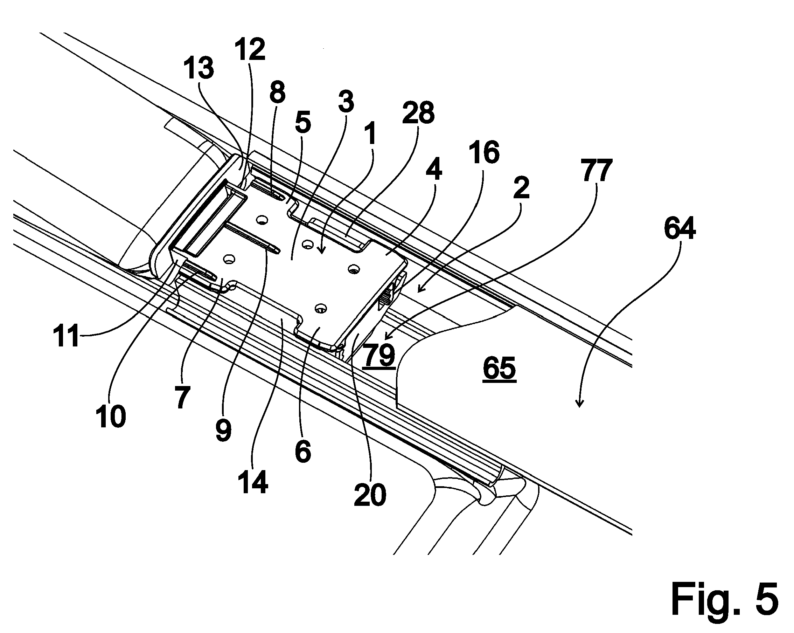

Fig. 5 zeigt in einer teilgeschnittenen perspektivischen Darstellung die beispielhafte erfindungsgemäße Vorrichtung gemäß Fig. 1 mit dem mit der Dachleiste 64 verbundenen Deckteil 1 im Eingriff mit dem Fußteil 2, das in dem Dachkanal 77 angebracht ist. Dabei greifen die an dem Fußteil 2 ausgebildeten Fixierzungen 4, 5, 6, 7 in die an dem Deckteil 1 ausgebildeten Rastnasen 17 unter Ausgleich von Höhentoleranzen in der Relativlage der Dachleiste 64 in Bezug auf den Boden 79 des Dachkanales 77 ein. Wie aus Fig. 5 erkennbar ist, lässt sich bei einer Ausgestaltung des Deckteiles 1 gemäß Fig. 1 mit einem Quersteg 74 und Winkelstegen 75, 76, die als Andruckelemente dem Stirnblockierteil 51 beziehungsweise dem Randblockierteil 50 gegenüber liegend angeordnet sind, das Einschieben des Randblockierteiles 50 und des Stirnblockierteiles 51 zusammen mit dem Aufsetzen und Aufdrücken des Deckteiles 1 auf das Fußteil 2 auch ohne ein gesondertes Werkzeug erreichen.

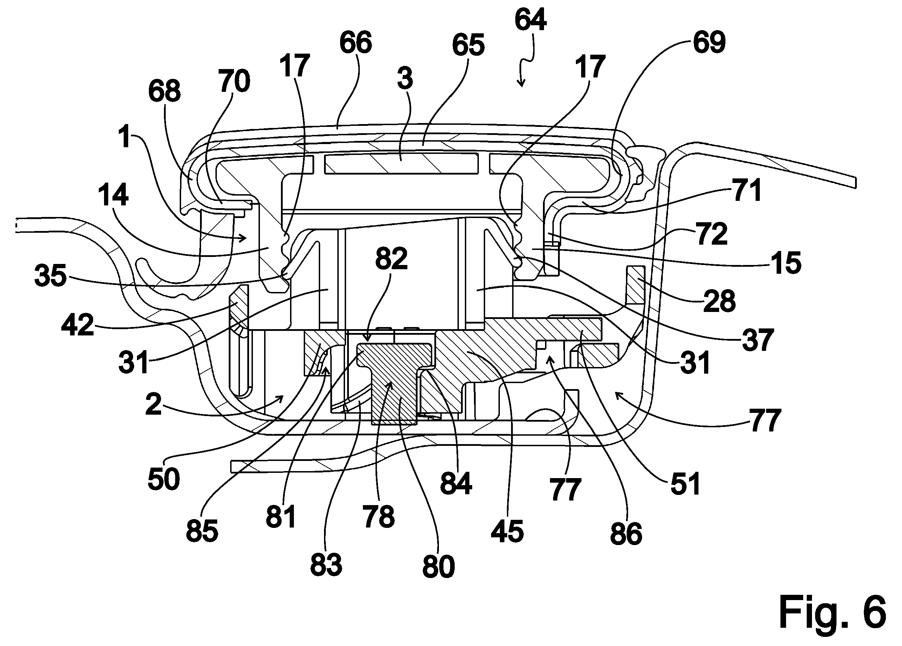

Fig. 6 zeigt in einer Schnittansicht die Anordnung des Deckteiles 1, des Fußteiles 2 und der Dachleiste 64 in dem Dachkanal 77. Aus der Darstellung gemäß Fig. 6 ist ersichtlich, dass die Fixierzungen 4, 5, 6, 7 mit den Rastnasen 17 in Eingriff sind, so dass das Deckteil 1 fest an dem Fußteil 2 befestigt ist. In der Anordnung gemäß Fig. 6 lässt sich aufgrund des Vorsehens mehrerer parallel zueinander verlaufender Rastnasen 17 bei Bedarf die Dachleiste 64 in verschiedenen Höhenlagen beispielsweise bedingt durch ein Nachlassen eine Vorspannung auch nachträglich in eine tiefer abgesenkte Anordnung in Bezug auf den Boden 79 des Dachkanales 77 bringen.

Weiterhin lässt sich der Darstellung gemäß Fig. 6 entnehmen, dass die dem Boden 79 des Dachkanales 77 zugewandte Unterseite des Bolzenschaftes 80 flächig auf der in der Bolzenaufnahme 82 ausgebildeten Auflagestufe 84 aufliegt, nachdem das Aufgleiten entlang der Anfahrrampen 83 abgeschlossen und das Fußteil 2 in der bestimmungsgemäßen Anordnung in dem Dachkanal 77 positioniert ist. Durch die Blockierwirkung des eingeschobenen Randblockierteiles 50 und des eingeschobenen Stirnblockierteiles 51 ist das Verankerungselement 45 in dieser Lage fixiert, wobei die an dem Randblockierteil 50 ausgebildete Anschlagzunge 57 dem Bolzenkopf 81 gegenüber liegt und diesen zusammen mit der geschlossenen Seite der Bolzenaufnahme 82 umschließt.

## Patentansprüche

1. Vorrichtung zum Fixieren eines Gegenstandes (64) in einer Vertiefung (77) mit einem Deckteil (1), das zum Eingriff mit dem Gegenstand (64) eingerichtet ist, und mit einem Fußteil (2), das zum Verankern in der Vertiefung (77) eingerichtet ist, wobei das Deckteil (1) und das Fußteil (2) lösbar miteinander verbindbar sind, **dadurch gekennzeichnet, dass** das Fußteil (2) ein Verankerungselement (45) aufweist, das zum Eingriff mit einem in der Vertiefung (77) angeordneten Befestigungselement (79) eingerichtet ist, dass das Verankerungselement (45) über eine Anzahl von elastischen Verbindungsstegen (46, 47, 48, 49) mit außenseitigen Wänden (20, 21) des Fußteils (2) verbunden ist und dass wenigstens ein Blockierteil (50, 51) vorhanden ist, mit dem beziehungsweise mit denen in einer Blockierstellung das Verankerungselement (45) in seiner Beweglichkeit gegenüber den außenseitigen Wänden (20, 21) in verschiedenen Anordnungen gegenüber den außenseitigen Wänden (20, 21) blockierbar ist.

2. Vorrichtung nach Anspruch 1, **dadurch gekennzeichnet, dass** der oder jeder sich von einer Seite von dem Verankerungselement (45) weg erstreckende Verbindungssteg (46, 47, 48, 49) wellenartig oder ziehharmonikaartig ausgebildet sind.

3. Vorrichtung nach Anspruch 1 oder Anspruch 2, **dadurch gekennzeichnet, dass** zwei Blockierteile (50, 51) an einander gegenüber liegenden Seiten des Verankerungselementes (45) vorhanden sind.

4. Vorrichtung nach einem der Ansprüche 1 bis 3, **dadurch gekennzeichnet, dass** jedes Blockierteil (50, 51) und das Verankerungselement (45) mit ineinander greifenden Führungsnuten (55, 60) und Führungsrippen (56, 61) ausgebildet sind.

5. Vorrichtung nach einem der Ansprüche 1 bis 4, **dadurch gekennzeichnet, dass** das oder jedes Blockierteil (50, 51) in der Blockierstellung in einem Aufnahmeraum (85, 86) angeordnet ist, der in einer Toleranzausgleichsrichtung größer als das betreffende Blockierteil (50, 51) ausgebildet ist.

6. Vorrichtung nach Anspruch 5, **dadurch gekennzeichnet, dass** das oder jedes Blockierteil (50, 51) wenigstens eine Krallnase (58, 63) aufweist, die in der Blockierstellung mit einer Wand (26, 27, 38, 39) des Aufnahmeraums (85, 86) zum Blockieren des Blockierteiles (50, 51) zusammenwirkt.

7. Vorrichtung nach einem der Ansprüche 1 bis 6, **dadurch gekennzeichnet, dass** das Deckteil (1) und das Fußteil (2) lösbar miteinander verbunden sind.

8. Vorrichtung nach Anspruch 7, **dadurch gekennzeichnet, dass** das Deckteil (1) und das Fußteil (2) mit ineinander greifenden Rastnasen (17) und Fixierzungen (4, 5, 6, 7) ausgebildet sind.

9. Vorrichtung nach einem der Ansprüche 1 bis 8, **dadurch gekennzeichnet, dass** das Verankerungselement (45) zur Aufnahme eines gegenüber einem Schaft (80) im Durchmesser vergrößerten Kopfes (81) eines Befestigungselementes (78) eingerichtet ist.

10. Vorrichtung nach Anspruch 7 oder Anspruch 8, **dadurch gekennzeichnet, dass** das Deckteil (1) bei Aufstecken des Deckteiles (1) auf das Fußteil (2) mit zum Einnehmen der Blockierstellung auf das oder jedes Blockierteil (50, 51) einwirkenden Andruckelementen (74, 75, 76) ausgebildet ist.

## Claims

1. Device for fastening an object (64) in a recess (77), having a cover part (1) which is adapted to engage with the object (64), and having a base part (2) which is adapted for anchoring in the recess (77), the cover part (1) and the base part (2) being able to be connected together releasably, **characterised in that** the base part (2) has an anchoring element (45) which is adapted to engage with a fastening element (79) arranged in the recess (77), **in that** the anchoring element (45) is connected to outer walls (20, 21) of the base part (2) by a plurality of elastic connecting webs (46, 47, 48, 49), and **in that** there is at least one blocking part (50, 51) by which, in a blocking position, the mobility of the anchoring element (45) relative to the outer walls (20, 21) can be blocked, in different positions relative to the outer walls (20, 21).

2. Device according to claim 1, **characterised in that** the or each connecting web (46, 47, 48, 49), which extends away from a side of the anchoring element (45), is of a sinuous or concertina-like form.

3. Device according to claim 1 or claim 2, **characterised in that** there are two blocking parts (50, 51) on mutually opposed sides of the anchoring element (45).

4. Device according to one of claims 1 to 3, **characterised in that** each blocking part (50, 51) and the anchoring element (45) are formed to have interengaging guide grooves (55, 60) and guide ribs (56, 61).

5. Device according to one of claims 1 to 4, **characterised in that**, in the blocking position, the or each blocking part (50, 51) is arranged in a receiving space (85, 86) which is formed to be larger than the blocking part concerned (50, 51) in a direction for compensating for tolerances.

6. Device according to claim 5, **characterised in that** the or each blocking part (50, 51) has at least one clawed nose (58, 63) which, in the blocking position, co-operates with a wall (26, 27, 38, 39) of the receiving space (85, 86) to lock the blocking part (50, 51).

7. Device according to one of claims 1 to 6, **characterised in that** the cover part (1) and the base part (2) are connected together releasably.

8. Device according to claim 7, **characterised in that** the cover part (1) and the base part (2) are formed to have interengaging latching noses (17) and fastening tongues (4, 5, 6, 7).

9. Device according to one of claims 1 to 8, **characterised in that** the anchoring element (45) is adapted to receive a head (81) of a fastening element (78) which is larger in diameter than a shank (80) thereof.

10. Device according to claims 7 or claim 8, **characterised in that** the cover part (1) is formed to have pressure-applying elements (74, 75, 76) which, when the cover part (1) is plugged onto the base part (2), act on the or each blocking part (50, 51) to cause it to assume the blocking position.

## Revendications

1. Dispositif pour la fixation d'un objet (64) dans une cavité (77), se composant d'un élément de recouvrement (1) qui est agencé pour pouvoir être mis en prise d'accouplement avec l'objet et se composant d'un élément formant semelle (2) qui est agencé pour pouvoir être ancré dans la cavité (77), l'élément de recouvrement (1) et l'élément formant semelle (2) étant en l'occurrence destinés à assemblés l'un avec l'autre, **caractérisé en ce que** l'élément formant semelle (2) est muni d'un élément d'ancrage (45) qui est agencé pour être mis en prise d'engagement avec un organe de fixation (79) disposé dans la cavité (77), **en ce que** l'élément d'ancrage (45) est raccordé au moyen d'un certain nombre de pontets de liaison élastiques (46, 47, 48, 49) à des parois extérieures (20, 21) de l'élément formant semelle (2) et **en ce qu'**il est prévu au-moins un élément de blocage (50, 51), au moyen duquel ou desquels il est possible, dans une position de blocage, d'immobiliser l'élément d'ancrage (45) par rapport aux parois extérieures (20, 21) dans différentes positions par rapport aux parois extérieures (20, 21).

2. Dispositif selon la revendication 1, **caractérisé en ce que** le ou chaque pontet de liaison (46, 47, 48, 49) qui va de puis un côté en s'écartant de l'élément d'ancrage (45) a une configuration structurale ondulée ou en accordéon.

3. Dispositif selon la revendication 1 ou la revendication 2, **caractérisé en ce qu'**il est prévu deux éléments de blocage (50, 51) au niveau de côtés de l'élément d'ancrage (45) se faisant respectivement face.

4. Dispositif selon l'une des revendications 1 à 3, **caractérisé en ce que** chaque élément de blocage (50, 51) et l'élément d'ancrage (45) sont munis de rainures de guidage (55, 60) et de nervures de guidage (56, 61) qui s'imbriquent respectivement en prise d'encastrement.

5. Dispositif selon l'une des revendications 1 à 4, **caractérisé en ce que** le ou chaque élément de blocage (50, 51) est, dans la position de blocage, disposé dans un espace de réception (85, 86) qui, dans une direction de rattrapage de variations dimensionnelles, est plus grand que l'élément de blocage (50, 51) concerné.

6. Dispositif selon la revendication 5, **caractérisé en ce que** le ou chaque élément de blocage (50, 51) comporte au-moins un ergot de cramponnement (58, 63) qui, dans la position de blocage, opère en combinaison avec une paroi (26, 27, 38, 39) de l'espace de réception (85, 86) pour assurer l'immobilisation en position de l'élément de blocage (50, 51).

7. Dispositif selon l'une des revendications 1 à 6, **caractérisé en ce que** l'élément de recouvrement (1) et l'élément formant semelle (2) sont respectivement assemblés avec une possibilité de dissociation ultérieure.

8. Dispositif selon la revendication 7, **caractérisé en ce que** l'élément de recouvrement (1) et l'élément formant semelle (2) sont munis d'ergots d'encastrement (17) et de languettes d'immobilisation en position (4, 5, 6, 7) qui s'imbriquent respectivement en prise d'encastrement les uns dans les autres.

9. Dispositif selon l'une des revendications 1 à 8, **caractérisé en ce que** l'élément d'ancrage (45) est agencé pour recevoir la tête (81) d'un organe de fixation (78), dont le diamètre est supérieur à celui d'une tige (80).

10. Dispositif selon la revendication 7 ou la revendication 8, **caractérisé en ce que** l'élément de recouvrement (1) est muni d'éléments de poussée en contact d'engagement (74, 75, 76) qui, lors de l'emmanchement de l'élément de recouvrement (1) sur l'élément formant semelle (2), permettent d'agir sur chaque élément de blocage (50, 51) pour assurer le passage en position de blocage.
